# EUROPÄISCHE PATENTSCHRIFT

(11) **EP 4 439 116 B1**
(45) Veröffentlichungstag und Bekanntmachung des Hinweises auf die Patenterteilung: **21.05.2025**
(21) Anmeldenummer: 24155969.9
(22) Anmeldetag: 06.02.2024
(51) Int. Cl.: G01S 7/481, G01S 17/10

(54) **OPTOELEKTRONISCHER SENSOR ZUR ERFASSUNG EINES OBJEKTS IN EINEM ÜBERWACHUNGSBEREICH**
OPTOELECTRONIC SENSOR FOR DETECTING AN OBJECT IN A SURVEILLANCE AREA
CAPTEUR OPTOÉLECTRONIQUE DESTINÉ À LA DÉTECTION D'UN OBJET DANS UNE ZONE DE SURVEILLANCE

(30) Priorität: 28.03.2023 DE 102023107903
(43) Veröffentlichungstag der Anmeldung: 02.10.2024
(73) Patentinhaber: SICK AG, 79183 Waldkirch (DE)
(72) Erfinder: Ostojic, Oliver, 79117 Freiburg (DE); Hug, Mathias, 79183 Waldkirch (DE)

(56) Entgegenhaltungen:
- DE-A1- 102018 128 669
- DE-A1- 102018 202 925
- DE-A1- 102020 109 596
- DE-A1- 102020 214 584
- DE-A1- 102020 216 043

## Beschreibung

Die Erfindung betrifft einen optoelektronischen Sensor zur Erfassung eines Objekts in einem Überwachungsbereich nach dem Oberbegriff von Anspruch 1.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Über die reine Objekterfassung hinaus wird in entfernungsmessenden Systemen auch eine Distanz zu dem Objekt bestimmt. Distanzsensoren nach dem Lichtlaufzeitprinzip (Lidar) messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Die Wahl des Empfangselements und der optische Aufbau eines solchen Sensors haben erheblichen Einfluss auf dessen Leistungsfähigkeit. Um auch geringe Empfangsintensitäten nachweisen zu können, werden in manchen Fällen Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode, auch SiPM, Silicon Photomultiplier). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geigermodus sind nicht nur hochempfindlich, sondern auch vergleichsweise kostengünstig. Zudem lassen sie sich mit wenig Aufwand auf einer Leiterkarte integrieren.

Die hohe Empfindlichkeit bringt jedoch auch Nachteile mit sich, denn sie beschränkt sich nicht nur auf die im Sensor genutzte Sendewellenlänge, sondern wirkt in einem breiten Wellenlängenbereich, der auch das Fremdlicht einschließt. Dabei ist wegen der vergleichsweise großen Detektorfläche von SPADs auch deren Fremdlichteintrag hoch. Die Fremdlichtmenge wiederum bestimmt hier entscheidend das Signal-Rausch-Verhältnis (SNR, signal-to-noise ratio). Fremdlicht kann durch Einsatz eines optischen Bandpassfilters ausgefiltert werden, das auf die Wellenlänge des Sendelichts abgestimmt ist und das besonders bei breitbandigem Fremdlicht wie Sonnenlicht für eine deutliche Verbesserung des Signal-Rausch-Verhältnisses sorgt. Das allein führt aber oft noch nicht zu befriedigenden Ergebnissen.

Es ist weiterhin möglich, das Fremdlicht zu begrenzen, indem im Empfangspfad für eine Fokussierung des Empfangslichtbündels gesorgt und in der Position, wo der Querschnitt am kleinsten ist, eine Blende positioniert wird. Eine derartige Blende muss aber justiert und fixiert werden. Wegen Bauteiltoleranzen und begrenzter Justagequalität wird die Blendenöffnung in der Praxis größer gewählt, als dies insbesondere für ein möglichst vorteilhaftes Signal-Rausch-Verhältnis optimal wäre. Signalverluste aufgrund von Empfangslichtanteilen, welche eine zu kleine oder gegenüber dem Empfangslichtbündel verschobene Blende nicht passieren können, würden einen überproportionalen Qualitätsverlust mit sich bringen. Die Blendenöffnung neben dem Empfangslichtbündel passierendes Fremdlicht führt zu zufälligen Detektionsereignissen, deren Einfluss als Schrotrauschen gemäß einer Wurzelfunktion beiträgt.

Sollen die Einbußen durch eine nicht optimale Blende begrenzt werden, so müssen toleranzarme Komponenten entwickelt und gefertigt und dann hoch präzise justiert und verzugsarm fixiert werden. Das erhöht die Herstellung durch Bauteilkosten sowie komplexe und langwierige Prozesse, die zudem wenig flexibel sind. Überdies muss im Produktionsprozess mit Gefahrengut wie Klebstoffen, Lötvorrichtungen und dergleichen umgegangen werden. In mehrstrahligen Systemen besteht zudem die Schwierigkeit, mehrere Sende-Empfangs-Pärchen aufeinander auszurichten und trotzdem die Blenden hochgenau auszulegen.

Eine herkömmliche Einlegeblende ist also aufgrund der großen mechanischen Toleranzen und damit Blendenöffnung nur von begrenztem Nutzen. Eine alternative Blende auf Chipebene des Empfangselements verkleinert den ausgeleuchteten Bereich, womit bei einem großflächigen SPAD-Empfänger mit dem Fremdlicht auch das Nutzlicht begrenzt wird.

Die EP 3 432 023 B1 offenbart ein Verfahren zur Herstellung eines optoelektronischen Sensors mit einer Blende, die individuell für jeden Sensor unter Verwendung von dessen eigener Empfangsoptik hergestellt wird. Die Blende selbst wird dabei aber nicht konkretisiert. Die DE 10 2020 109 596 A1 befasst sich mit einem optoelektronischen Sensor mit Blende und einem Herstellungsverfahren dafür. Die Blende ist als mindestens eine Blendenöffnung in einer Absorptionsschicht eines mehrschichtigen Substrats ausgebildet.

Die DE 10 2018 128 669 A1 offenbart ein Verfahren zum Herstellen eines optischen Systems. Zunächst werden ein Strahlablenkungselement und ein Abschirmungselement in einer Halterung in einer vorgegebenen Anordnung zueinander fixiert. Dann wird das Abschirmungselement mittels Bearbeitungslichtstrahlen bearbeitet, um daraus ein Blendenelement zu bilden.

Wegen der extremen Empfindlichkeit von SPADs wird zumindest der Lichtempfänger herkömmlich durch einen metallischen Schirmrahmen vor elektromagnetischen Störeinflüssen (EMV, Elektromagnetische Verträglichkeit) geschützt. Das hat aber mit der optischen Blendenfunktion nichts zu tun. Im Gegenteil sind Blende und Schirmrahmen einander räumlich im Weg.

In der DE 10 2020 216 043 A1 wird ein optischer Sensor vorgestellt, der ein zylindrisches Abschirmelement aus einem zumindest innen mit Kunststoffmaterial beschichteten Metallschirm aufweist. Ein Befestigungselement des Metallschirms ist mittels elektrisch leitendem Klebstoff mit einem Leiterplattengehäuse verbunden, welches einen Massekontakt aufweist. Die DE 10 2020 214 584 A1 betrifft ein Sichtfenster für ein Gehäuse einer LiDAR-Sensoreinrichtung.

In der DE 20 2013 005 999 U1 wird ein nach dem Streulichtprinzip arbeitender optischer Rauchmelder mittels einer Abschirmungseinrichtung gegen EMV-Einstrahlung geschützt. In die Abschirmeinrichtung ist eine Leiterplatte mit einer Kupferlage als Abschirmlage eingesetzt, auf deren Innenseite, somit von Abschirmeinrichtung und Abschirmschicht umgeben, ein Photosensor bestückt ist. In der Leiterplatte ist eine Durchgangsöffnung für zu detektierendes Licht in Form einer kreisrunden Bohrung durch die Leiterplatte vorgesehen. Die Durchgangsöffnung ist zugleich eine optische Blende, die nur von einem Streuzentrum des Rauchmelders eintreffendes Licht in Richtung zu dem Photosensor passieren lässt.

Die DE 10 2020 214 584 A1 betrifft ein Sichtfenster für ein Gehäuse einer LiDAR-Sensoreinrichtung.

In der DE 10 2018 202 925 A1 wird eine Sensoreinrichtung beschrieben, deren Empfangseinrichtung in einem Schirmkasten untergebracht ist. Ein strahldurchlässiger Strahleinfallbereich des Schirmkastens ist mit mindestens zwei in Strahlrichtung hintereinanderliegenden elektrisch leitenden Gittern verschlossen.

Es ist daher Aufgabe der Erfindung, die Lichtlaufzeitmessung unter Verwendung einer Empfangsoptik mit Blende weiter zu verbessern.

Diese Aufgabe wird durch einen optoelektronischen Sensor zur Erfassung eines Objekts in einem Überwachungsbereich nach Anspruch 1 gelöst. Der Sensor umfasst einen Lichtsender zum Aussenden von Sendelicht sowie einen Lichtempfänger, der das im Überwachungsbereich remittierte Sendelicht wieder empfängt. Der Lichtsender kann mit dem Lichtempfänger eine koaxiale oder biaxiale Anordnung bilden. Der Sensor weist einen Lichtempfänger mit einer Vielzahl von im Geigermodus betreibbaren Lichtempfangselementen auf. Ein solcher SPAD- oder SiPM-Empfänger ist wie einleitend erläutert besonders empfindlich und hat zudem eine schnelle Ansprechzeit. Eine Vielzahl von Lichtempfangselementen bietet eine noch größere Detektionsfläche und ermöglicht außerdem eine statistische Auswertung. Eine Steuer- und Auswertungseinheit ist dafür ausgebildet, ein Empfangssignal des Lichtempfängers auszuwerten, um aus einer Lichtlaufzeit zwischen Aussenden des Sendelichts und Empfangen des Empfangslichts mit dem remittierten Sendelicht einen Abstand der Objekte zu bestimmen. Der Sensor verwirklicht damit das einleitend beschriebene LIDAR-Messprinzip auf Basis von SPADs oder einem SiPM.

Dem Lichtempfänger ist eine Empfangsoptik mit einer Blende vorgeordnet, beispielsweise eine Einzellinse, ein Objektiv mit mehreren Linsen oder eine sonstige Anordnung optischer Elemente. Die Blende ist bevorzugt in einer Fokalebene der Empfangsoptik angeordnet, so dass ein von der Empfangsoptik erzeugtes Empfangslichtbündel am Punkt kleinster Einschnürung durch die Blendenöffnung der Blende fällt. Je nach Ausführungsform wird die Fokalebene aufgrund von Toleranzen nicht genau getroffen, das wird immer noch als Anordnung in der Fokalebene bezeichnet. Durch die Blende kann zumindest der Fremdlichtanteil unterdrückt werden, welcher die Empfangsoptik auf dem Nahfeld oder mittleren Entfernungen erreicht. Die Blendenöffnung befindet sich vorzugsweise innerhalb der Fokalebene dort, wo das Empfangslichtbündel die Blende passiert, so dass möglichst keine Nutzsignalanteile in der Blende verloren gehen. Die Blende umfasst ein Blendensubstrat mit mindestens einer metallischen Schicht und eine Blendenöffnung. Prinzipiell kann das Blendensubstrat Metall, somit mit der metallischen Schicht identisch sein. Wegen der besseren Bearbeitungsmöglichkeiten ist vorzugsweise ein Blendensubstrat wie Glas, Kunststoff oder eine dünne metallische Trägerfolie vorgesehen, das dann beschichtet wird. Dabei sind neben der genannten mindestens einen metallischen Schicht weitere Schichten für andere Funktionen möglich, wie später noch ausgeführt.

Die Erfindung geht von dem Grundgedanken aus, die Blende als Teil einer EMV-Abschirmung zu nutzen. Dazu wird ein Kontaktbereich der metallischen Schicht zum Potentialausgleich metallisch leitend mit einem anderen Bauteil des Sensors verbunden. Das andere Bauteil kann eines der bereits genannten Bauteile sein, insbesondere die Steuer- und Auswertungseinheit. Vorzugsweise ist das andere Bauteil geerdet, womit dann auch die metallische Schicht der Blende geerdet ist. Vorzugsweise sind zwei Kontaktbereiche zu beiden Seiten der Blendenöffnung vorgesehen und jeweils elektrisch leitend mit dem anderen Bauteil verbunden.

Die Erfindung hat den Vorteil, dass die Blende erfindungsgemäß mit einer EMV-Abschirmung nicht nur verträglich wird, sondern sogar in einer Doppelfunktion mit dazu beiträgt.

Somit ist die optische Funktion der Blende gewahrt, möglichst nur das remittierte Sendelicht weitgehend ohne überlagerndes Fremdlicht zu dem Lichtempfänger gelangen zu lassen. Zugleich wird ein sehr guter EMV-Schutz erreicht, den die sehr kleine Blendenöffnung nur noch minimal beeinträchtigt. Deshalb kann der Sensor insgesamt mit besonders guter Empfindlichkeit, Robustheit und Genauigkeit messen.

Der Sensor weist vorzugsweise eine leitende Abschirmung zumindest des Lichtempfängers auf. Die leitende Abschirmung sorgt für EMV-Schutz an den Stellen und in die Richtungen, wo sich die Blende nicht befindet. Mit anderen Worten ergänzen sich leitende Abschirmung und die leitend mit dem anderen Bauteil verbundene Blende gemeinsam zu einem EMV-Schutz vorzugsweise in alle Richtungen.

Der Kontaktbereich ist bevorzugt mit der Abschirmung elektrisch leitend verbunden. Die Abschirmung ist somit das andere Bauteil, mit dem die metallische Schicht für den Potenzialausgleich elektrisch leitend verbunden ist. Die Abschirmung ihrerseits ist vorzugsweise geerdet.

Der Kontaktbereich ist bevorzugt mit einer Elektronikkarte des Sensors elektrisch leitend verbunden, insbesondere einer Elektronikkarte der Steuer- und Auswertungseinheit. Die Elektronikkarte oder Leiterkarte stellt ein geeignetes Potential für den Potenzialausgleich zur Verfügung, vorzugsweise ein Nullpotential oder eine Erdung. Somit ist nun die Elektronikkarte das andere Bauteil, mit dem die metallische Schicht elektrisch leitend verbunden ist. Eine ergänzende Abschirmung kann ebenfalls mit der Elektronikkarte leitend verbunden sein, oder die leitende Verbindung erfolgt indirekt von der Elektronikarte über die Abschirmung zu der metallischen Schicht oder umgekehrt. Die Elektronikkarte kann diejenige der Steuer- und Auswertungseinheit sein, aber auch eine andere Elektronickarte des Lichtempfängers, Lichtsenders, einer Versorgung oder Schnittstelle des Sensors sowie jede beliebige sonstige Elektronikkarte.

Vorzugsweise ist über den Kontaktbereich eine Spannung an die metallische Schicht anlegbar, um die metallische Schicht zu erwärmen. Damit bekommt die Blende noch eine weitere Funktion als Heizelement beziehungsweise besonders effektiver Betauungsschutz. Dafür wird bevorzugt eine Spannungsquelle an zwei Kontaktbereiche der metallischen Schicht angelegt. Die Spannungsquelle kann eine einstellbare oder konstante Spannung zur Verfügung stellen, oder sie wird, beispielsweise von der Steuer- und Auswertungseinheit, situationsabhängig je nach Anwendung, Betriebsphase, gemessener Außentemperatur oder Feuchtigkeit und dergleichen angepasst. Die Verlustleistung und damit Erwärmung lässt sich ferner über den elektrischen und thermischen Widerstand beeinflussen, somit insbesondere durch Wahl von Schichtdicke und Materialzusammensetzung.

Eine dem Lichtempfänger zugewandte metallische Schicht liegt erfindungsgemäß wenigstens teilweise frei, um von dem Lichtempfänger rückgestreutes remittiertes Sendelicht erneut auf den Lichtempfänger zu reflektieren. Die metallische Schicht wirkt hier als Konzentrator oder Restlichtverstärker. Streulicht vom Lichtempfänger kann so doch noch registriert werden, dadurch ergibt sich eine Effizienzsteigerung des Messsystems. Zu beachten ist, dass es sich bei diesem Streulicht um solches handelt, das die Blende bereits passiert hat, es ist also Nutzlicht und nicht Fremdlicht.

Der freiliegende Teil der metallischen Schicht ist bevorzugt strukturiert, um Reflexionseigenschaften einzustellen. Die Oberfläche in dem Reflexionsbereich zur Rückstreuung von remittiertem Sendelicht auf den Lichtempfänger weist somit eine Strukturierung oder ein Muster auf, das beispielsweise eine Vorzugsrichtung der Reflexion einstellt, um das Licht besonders effektiv auf den Lichtempfänger zurückzuwerfen.

Die Blende ist bevorzugt mehrschichtig mit mindestens einer der folgenden zusätzlichen Schichten auf einer dem Lichtempfänger zugewandten und/oder einer dem Lichtempfänger abgewandten Seite ausgebildet: eine Absorptionsschicht, eine Antireflexionsschicht, eine Filterschicht. Die metallische Schicht oder die metallischen Schichten sind je nach Ausführungsform an beliebiger Stelle davor oder dazwischen vorgesehen. Erforderlichenfalls werden die Kontaktbereiche bei einer weiteren Beschichtung freigelassen oder auch additiv aufgewachsen, oder sie werden nachträglich beispielsweise mittels Laserablation wieder freigelegt. Es entsteht eine mehrschichtige Blende mit verschiedenen Zusatzfunktionen. Es ist vorstellbar, die metallische Schicht insbesondere mittels Laserbearbeitung zu strukturieren, so dass sie diffus oder nicht reflektierend wird.

Eine Absorptionsschicht sorgt dafür, dass einfallendes Licht, das nach der Remission in dem Überwachungsbereich nicht durch die Blendenöffnung tritt, nach Möglichkeit auch durch Mehrfachreflexion nicht noch zum Lichtempfänger gelangt. Die Absorptionsschicht weist bevorzugt einen metallischen Anteil, insbesondere Schwarztitan oder Schwarzchrom, einen Sprühlack und/oder Kohlenstoffnanoröhrchen auf. Strukturierte Kohlenstoffnanoröhrchen sind beispielsweise als VANTA bekannt. Sie weisen eine besonders starke Absorption auf. Als eine Art Zwischenform zwischen einer aufgedampften Absorptionsschicht und Kohlenstoffnanoröhrchen sind strukturierte anorganische Schichten wie Acktar MetalVelvet denkbar. Eine Antireflexschicht ist insbesondere im Zusammenhang mit Glas oder Kunststoff als Blendensubstrat von Vorteil. Damit wird Streulicht vor allem an den freigelegten Stellen der Blendenöffnung unterdrückt. Eine Filterschicht, insbesondere mit der Filtercharakteristik eines Bandpassfilters, kann Fremdlicht außerhalb des Spektrums des Nutzlichts des eigenen Lichtsenders zusätzlich ausgeblendet werden. Denn die Blende sorgt zwar dafür, dass seitliches Fremdlicht unterdrückt wird. Im Kernbereich des Empfangslichtbündels, das die Blendenöffnung passiert, überlagert sich aber zwangsläufig auch Fremdlicht, das von der Blende nicht beeinflusst wird. Hier verbessert eine Selektion nach Wellenlänge das Signal-Rausch-Verhältnis weiter.

Die Blendenöffnung ist bevorzugt mit einem Laser, insbesondere einem Laserablationsprozess hergestellt. Dafür werden noch bevorzugter ultrakurze Laserpulse verwendet, also Pulse im Pico- oder sogar Femtosekundenbereich. Die Blendenöffnung ist besonders bevorzugt individuell unter Verwendung der Empfangsoptik hergestellt. Die Blende beziehungsweise deren Blendenöffnung wird demnach als individuelle Blende unter Verwendung der Empfangsoptik spezifisch für gerade die Empfangsoptik hergestellt, mit der gemeinsam sie in dem optoelektronischen Sensor eingesetzt ist. Die Empfangsoptik kann in der Form beteiligt sein, dass sie direkt an der Herstellung beteiligt ist oder dass ihre Eigenschaften die Herstellung der Blendenöffnung bestimmen. Die Blende passt damit optimal zu der Empfangsoptik und dem von der Empfangsoptik erzeugten Empfangslichtbündel. Die individuelle Herstellung der Blende ersetzt die Justierung oder ergänzt sie zumindest. Herkömmlich würde dagegen eine Blende als Bauteil für mindestens eine ganze Charge von Sensoren bezogen, und der Sensor muss entweder die Konsequenzen von Toleranzen in Kauf nehmen, oder dies wird durch eine aufwändige Justage ausgeglichen.

Bevorzugt wird die Blendenöffnung mit einem Laser hergestellt, dessen Strahlengang durch die Empfangsoptik geführt wird, insbesondere in einem Laserablationsprozess.

Dazu wird vorzugsweise gar nicht vorab vermessen, wie die individuelle Blende aussehen sollte. Da der Laser selbst die Empfangsoptik passiert, entspricht sein Strahlengang demjenigen des remittierten Sendelichts. Dazu sollte vorzugsweise der Laser vergleichbare geometrische Strahleigenschaften haben, also beispielsweise entsprechend Licht aus dem Unendlichen kollimiert sein. Eine künstliche Defokussierung oder ein zusätzliches optisches Element für den Laser ist denkbar, um Abweichungen des Strahlengangs etwa durch abweichende Wellenlängen zwischen Materialbearbeitungslaser und späterem Nutzlicht auszugleichen.

Alternativ wird die Blendenöffnung mit einem Laser hergestellt, dessen Strahlengang nicht durch die Empfangsoptik geführt wird, sondern auf die Blendenschicht fokussiert wird, insbesondere in einem Laserablationsprozess. Hierzu wird vorab die Position und Form der empfangsseitigen individuellen Blende vermessen. Ebenso sollten vorzugsweise Korrekturwerte der Blendenposition einbezogen werden. Dieses Verfahren ist insbesondere bei mehreren Messlagen vorteilhaft. Das remittierte Sendelichtbündel wird vorzugsweise in der Montageposition der Empfangsoptik vermessen, um eine Eigenschaft der herzustellenden individuellen Blendenöffnung zu gewinnen. Relevante Eigenschaften können beispielsweise der Strahlquerschnitt in bestimmten Abständen oder dessen Lage im Raum sein. Dabei wird ohne Beschränkung der Allgemeinheit die Richtung der optischen Achse der Empfangseinheit als Z-Richtung bezeichnet.

Die individuelle Blendenöffnung wird bevorzugt in einer Fertigungslinie des Sensors hergestellt. Damit wird die Herstellung einer individuellen Blende ein integraler Schritt innerhalb der üblichen Fertigung. Es müssen keine Teile bezogen werden, und es ist kein besonderer Prozessaufwand für die Beschaffung und Zuführung der individuellen Blenden erforderlich.

Der Sensor ist bevorzugt als Laserscanner ausgebildet und weist eine bewegliche Ablenkeinheit auf, mit deren Hilfe das Sendelicht periodisch durch den Überwachungsbereich geführt wird. Der Laserscanner tastet mit dem Sendelicht im Verlauf der Bewegung der beweglichen Ablenkeinheit eine Ebene ab. Bei einem mehrstrahligen Messsystem, das sogleich noch vorgestellt wird, tastet jeder Sendelichtstrahl eine eigene Lage ab, es entsteht ein Mehrlagenscanner. Nur dessen zentrale Lage in Elevation Null, sofern überhaupt vorhanden, ist eine Ebene im mathematischen Sinne, die übrigen Lagen sind ähnlich einer geschachtelten Sanduhr gekrümmt. Die Ablenkeinheit ist vorzugsweise in Form einer drehbaren Abtasteinheit ausgebildet, die praktisch einen beweglichen Messkopf bildet, in dem Lichtsender und/oder Lichtempfänger und vorzugsweise auch zumindest Teile der Steuer- und Auswertungseinheit untergebracht sind. Alternativ kann die Ablenkeinheit ein Drehspiegel sein. Bei einem Mehrlagenscanner führt dies aber zu weiteren Krümmungen der Lagen und auch deren Durcheinandermischen, weil der Elevationswinkel der Abtastung dann von der Drehstellung abhängt.

Der Lichtsender ist bevorzugt zum Aussenden mehrerer voneinander separierter Lichtstrahlen und der Lichtempfänger zum Erzeugen jeweiliger Empfangssignale aus mehreren remittierten Lichtstrahlen ausgebildet. Der Sensor wird damit zu einem mehrstrahligen Sensor oder Mehrfachtaster, der mehrere Messpunkte antastet. Vorzugsweise misst die Steuer- und Auswertungseinheit mit jedem der mehreren Strahlen anhand der Lichtlaufzeit einen Abstand. Die mehreren Messstrahlen teilen sich vorzugsweise dieselbe Empfangsoptik. Bevorzugt weist die Blende eine Blendenöffnung je Lichtstrahl auf.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors;
- Fig. 2: eine schematische Schnittansicht eines Schichtsystems mit einer metallischen Schicht, aus dem eine Blende hergestellt wird;
- Fig. 3: eine Schnittansicht gemäß Figur 2 nun mit Blendenöffnung;
- Fig. 4: eine Schnittansicht einer Blende, in der eine metallische Schicht zum Potentialausgleich mit einem geerdeten Bauteil verbunden ist;
- Fig. 5: eine Schnittansicht einer Blende, in der eine metallische Schicht zum Erwärmen mit einer Spannungsquelle verbunden ist;
- Fig. 6: eine Schnittansicht mit schematischem Strahlverlauf an einem Lichtempfänger, wobei rückgestreute Lichtanteile von einem freigelegten Bereich einer metallischen Schicht einer Blende nochmals zum Lichtempfänger zurückgeworfen werden;
- Fig. 7: eine Schnittansicht einer mehrschichtigen Blende mit einer metallischen Schicht;
- Fig. 8: eine Schnittansicht gemäß Figur 7 nun mit Bearbeitung der Oberfläche der metallischen Schicht zumindest in einem Teilbereich; und
- Fig. 9: eine schematische Schnittdarstellung eines optoelektronischen Sensors in einer Ausführungsform als Laserscanner.

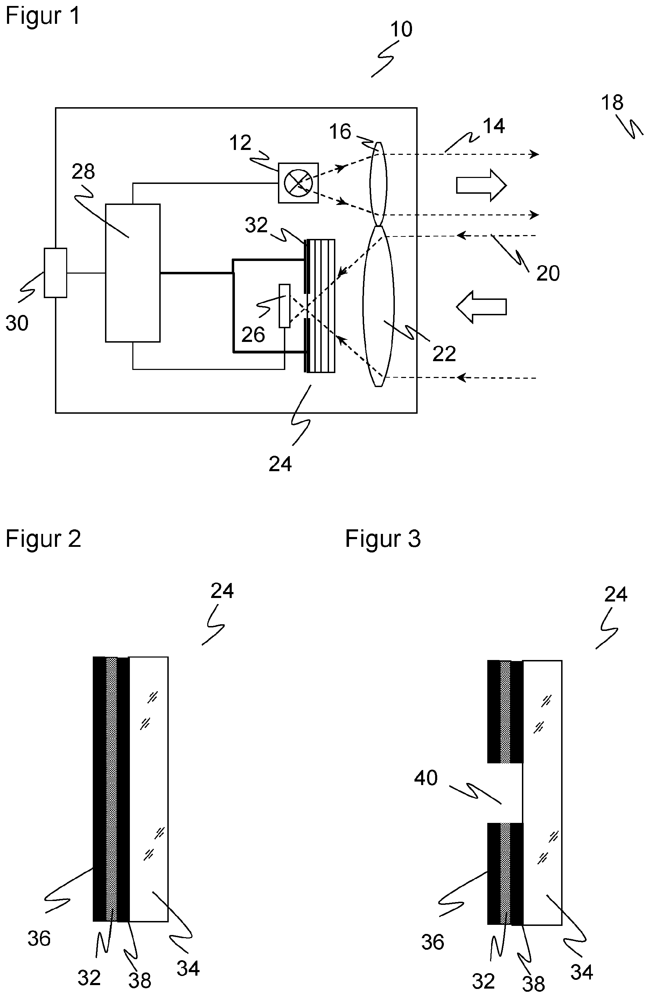

Figur 1 zeigt eine Blockdarstellung eines optoelektronischen Sensors 10, der hier beispielhaft als Lichttaster ausgebildet ist. Der Sensor 10 weist einen Lichtsender 12 auf, beispielsweise eine Laserdiode, deren Sendelicht 14 in einer Sendeoptik 16 kollimiert und dann in einen Überwachungsbereich 18 ausgesandt wird. Das an Objekten in dem Überwachungsbereich 18 remittierte Licht wird als Empfangslicht 20 mit einer Empfangsoptik 22 durch eine Blende 24 auf einen Lichtempfänger 26 geleitet. Der Lichtempfänger 26 weist eine Vielzahl von Lichtempfangselementen oder Pixeln in Form von Lawinenphotodioden auf, die zur hochempfindlichen Erfassung von Empfangslicht 20 im Geiger-Modus betrieben werden.

Weiterhin ist eine Steuer- und Auswertungseinheit 28 vorgesehen, die mit dem Lichtsender 12 und dem Lichtempfänger 26 verbunden ist. Die Steuer- und Auswertungseinheit 28 erfasst anhand des Empfangssignals des Lichtempfängers 26 Objekte in dem Überwachungsbereich 18. Dabei wird in einer Ausführungsform des Sensors 10 als entfernungsmessender Lichttaster durch Aussenden von Lichtpulsen und Bestimmen der Lichtlaufzeit bis zu deren Empfang auch der Abstand der erfassten Objekte gemessen. Über eine Schnittstelle 30 kann die Steuer- und Auswertungseinheit 28 verarbeitete oder rohe Sensormessdaten ausgeben beziehungsweise umgekehrt Steuer- und Parametrieranweisungen entgegennehmen.

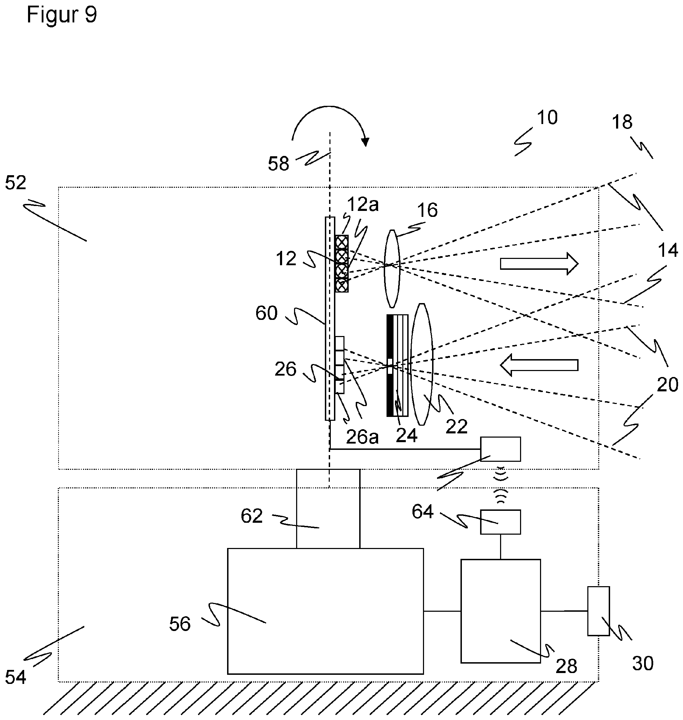

Die anhand der Figur 1 beschriebene Ausführungsform des Sensors 10 ist nur beispielhaft zu verstehen. Abstandsmessung mittels Lichtlaufzeitverfahren wird in einer größeren Familie von optoelektronischen Sensoren genutzt, beispielsweise in tastenden oder entfernungsmessenden Lichtgittern, Laserscanner oder Solid-State-LIDAR-Systemen verschiedener Bauart. Diese Sensoren 10 können in ihrem Aufbau erheblich von Figur 1 abweichen, beispielsweise Sende- und Empfangskanal über einen gemeinsamen Teilerspiegel führen oder passiv arbeiten und damit gänzlich auf einen Sendekanal verzichten. Eine besonders vorteilhafte Ausführungsform als mehrstrahliger Laserscanner oder Mehrlagenscanner wird abschließend unter Bezugnahme auf die Figur 9 vorgestellt.

Der Kern der Erfindung bezieht sich auf die Blende 24. Sie weist einen Schichtaufbau auf, der im Folgenden näher erläutert wird, wobei zumindest eine metallische Schicht 32 vorgesehen ist. Mittels Kontaktbereichen der metallischen Schicht 32 erfolgt ein Potentialausgleich oder eine Erdung durch leitende Verbindung zu einem entsprechenden Bauteil des Sensors 10, das auf dem gewünschten Potential liegt. Dargestellt in Figur 1 ist in dieser Rolle die Steuer- und Auswertungseinheit 28 beziehungsweise deren Elektronikkarte oder Leiterkarte.

Figur 2 zeigt eine schematische Schnittansicht eines Schichtsystems, aus dem die Blende 24 beispielhaft hergestellt wird. In diesem Stadium ist das Schichtsystem noch unbearbeitet oder ein Rohling. Als beispielhafte Schichten gezeigt sind ein transparentes Substrat, beispielsweise ein Glassubstrat 34, und die metallische Schicht 32. Dabei ist außen auf der metallischen Schicht 32 eine Absorptionsschicht 36 und zwischen metallischer Schicht 32 und Glassubstrat 34 eine weitere Absorptionsschicht 38 vorgesehen. Anstelle des Glassubstrats 34 kann eine sehr dünne Folie, beispielsweise eine Aluminiumfolie oder ein ähnlich dünnes Trägermaterial von beispielsweise 10 µm Dicke verwendet werden. Die metallische Schicht 32 kann alternativ auf der anderen Seite des Glassubstrats 34 angeordnet sein, oder es sind weitere metallische Schichten auf der einen Seite oder zu beiden Seiten vorgesehen.

Die Verwendung zweier Absorptionsschichten 36, 38 ist beispielhaft zu verstehen, die metallische Schicht 32 kann bereits selbst als Absorptionsschicht fungieren, es kann nur eine Absorptionsschicht verwendet werden, oder es sind zusätzliche Absorptionsschichten zu einer Seite oder zu beiden Seiten des Glassubstrats 34 vorhanden. Die Absorptionsschichten 36, 38 weisen vorzugsweise einen hohen Absorptionsgrad über einen breiten Wellenlängenbereich und einen minimalen hemisphärischen Reflexionsgrad auf. Das Absorbermaterial kann über ein Schichtsystem mit metallischem Anteil aufgebracht sein, beispielsweise Schwarztitan oder Schwarzchrom. Möglich sind auch Sprühlacke. Bei besonders hohen Güteansprüchen kann ein strukturiertes Material auf Kohlenstoffbasis verwendet werden, beispielsweise strukturierte Kohlenstoffnanoröhren, die einen sehr hohen Absorptionsgrad besitzen und nicht glänzen. Alternativ können strukturierte anorganische Beschichtungen eingesetzt werden, die sich technisch zwischen den beiden zuvor genannten Materialien einordnen lassen, etwa Acktar MetalVelvet. Das Absorbermaterial wird vorzugsweise möglichst dünn und homogen aufgetragen, so dass es durch Abrasion oder Ablation möglichst homogen und restfrei abgetragen werden kann.

Es sind zusätzliche Schichten zu einer Seite oder zu beiden Seiten des Glassubstrats 34 in praktisch beliebiger Anordnung der Schichten vorstellbar. Ein Beispiel ist eine Antireflex-Beschichtung, um im Bereich der späteren Blendenöffnungen möglichst viel Licht in der Wellenlänge des Nutzlichts zu transmittieren, und zwar vorzugsweise über einen breiten Einfallswinkelbereich. Ein weiteres Beispiel ist eine Filterschicht vorzugsweise mit den Eigenschaften eines optischen Bandpassfilters, mit dem Fremdlicht außerhalb des Nutzwellenlängenbereichs des Lichtsenders 12 unterdrückt wird.

Figur 3 zeigt eine Schnittansicht gemäß Figur 2 nun mit Blendenöffnung 40, die durch gezielten lokalen Abtrag des Materials der Absorptionsschicht 36 erzeugt wurde. Dafür wird vorzugsweise ein Laser verwendet, noch bevorzugter durch Einstrukturieren in einen Ablationsprozess insbesondere mit einem Ultrakurzpulslaser, also einem Pico- oder Femtosekundenlaser. Damit können Blendenöffnungen 40 präzise an beliebigen Positionen erzeugt werden. Der Prozess kann zweistufig sein, indem zuerst Referenzlöcher zur optischen Justage eingebracht und dann nach der optischen Justage die Blendenöffnungen 40 abladiert werden. Die Referenzlöcher können unter Umständen schon bei Lieferung des Rohlings gemäß Figur 2 vorgesehen sein.

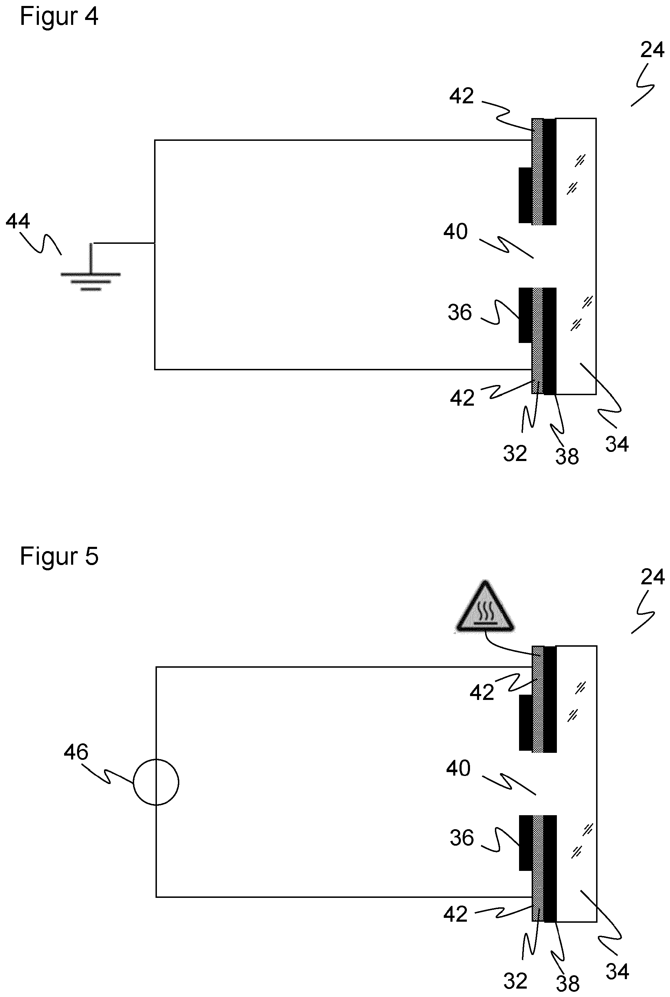

Figur 4 zeigt eine Schnittansicht einer Blende 24, in der die metallische Schicht 32 an Kontaktbereichen 42 zum Potentialausgleich mit einem geerdeten Bauteil 44 verbunden ist. Das Lichtempfangselement 26 weist eine sehr hohe optische Empfindlichkeit auf, und dies geht mit einer hohen elektrischen Empfindlichkeit einher. Um elektrische Störungen zu reduzieren, werden daher vorzugsweise nicht gezeigte geerdete Abschirmungen zumindest um das Lichtempfangselement 26 angeordnet. Eine optische Öffnung dieser Abschirmung sollte so klein wie möglich bleiben, um die Abschirmung elektrischer Störsignale möglichst wenig zu beeinträchtigen. Herkömmlich verursacht dies erhebliche Schwierigkeiten, weil eine solche Öffnung unter Berücksichtigung aller Bauteiltoleranzen das Nutzlicht immer noch durchlassen muss. Erfindungsgemäß erfüllt hingegen die Blende 24 eine Doppelfunktion als optische Blende und elektrische Abschirmung.

Die metallische Schicht 32 liegt an den Kontaktbereichen 42 frei. Dies kann im Beschichtungsprozess entsprechend berücksichtigt worden sein, oder es werden entsprechende additive oder subtraktive Verfahren genutzt, wie Laserablation, um die Kontaktbereiche 42 zu schaffen. Die elektrische Verbindung zu dem geerdeten Bauteil 44 wird auf beliebige Weise hergestellt, beispielsweise mittels Federkontakten, Löten, Schweißen oder sonstigen Kontaktmöglichkeiten. Dadurch ist die Blende 24 beziehungsweise deren metallische Schicht 32 geerdet, und so wird für einen besonders effizienten Schutz vor elektromagnetischer Störstrahlung gesorgt (EMV, elektromagnetische Verträglichkeit).

Figur 5 zeigt eine Schnittansicht einer Blende 24, in der eine metallische Schicht zum Erwärmen mit einer Spannungsquelle 46 verbunden ist. Während also in der unter Bezugnahme auf die Figur 4 beschriebenen Ausführungsform die metallische Schicht lediglich geerdet wurde, kommt hier neben der EMV-Abschirmung noch eine weitere Funktion hinzu. Durch Anlegen einer Spannung kann nämlich Verlustleistung an der metallischen Schicht 32 erzeugt werden, die für eine Erwärmung der metallischen Schicht und somit für einen effektiven Betauungsschutz sorgt. Über die Schichtdicke und das Materialsystem kann der elektrische und thermische Widerstand eingestellt werden. Dadurch sind herkömmliche Heizelemente zur Vermeidung von Betauung oder sich beschlagenden optischen Elementen, insbesondere eine Frontscheibenheizung, nicht mehr erforderlich.

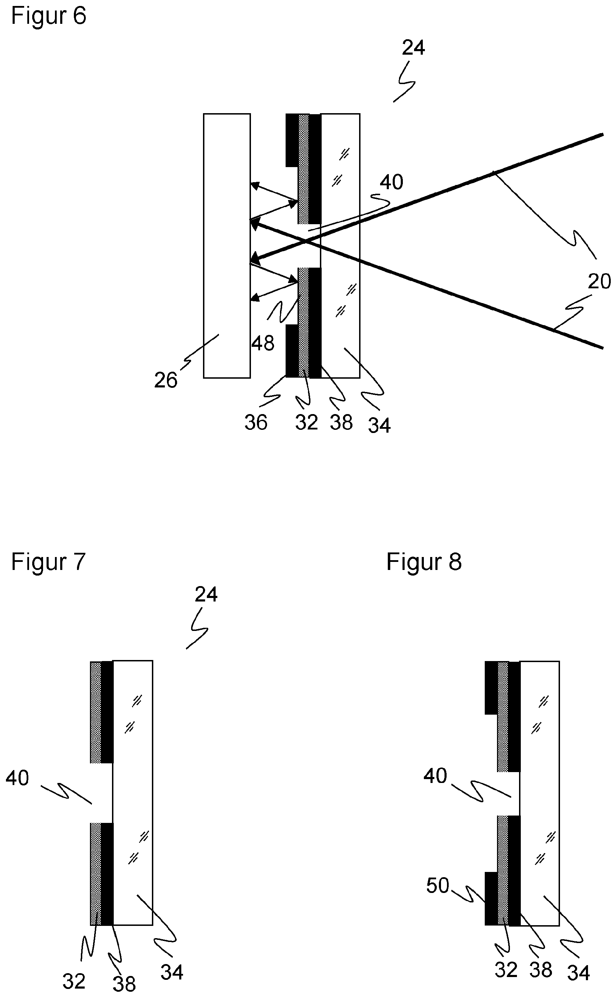

Figur 6 zeigt eine Schnittansicht mit schematischem Strahlverlauf des Empfangslichts 20 an dem Lichtempfänger 26. Wie auch vorzugsweise in den anderen Ausführungsformen befindet sich die Blende 24 in unmittelbarer Nähe des Lichtempfängers 26, um den Blenden- und Abschirmeffekt zu erhöhen. Die metallische Schicht 32 ist hier in einem Reflexionsbereich 48 zusätzlich freigelegt. Dadurch werden Lichtanteile des Empfangslichts 20, die zunächst zurückgestreut wurden, nochmals auf den Lichtempfänger 26 zurückgeworfen, wie mit den Pfeilen angedeutet. Das trägt zu einer Maximierung der Photonenausbeute bei und wirkt wie eine Art Restlichtverstärke, da zunächst verlorengegangene Lichtanteile doch noch von dem Lichtempfangselement 26 registriert werden können. Gerade im Zusammenhang mit SPADs oder SiPMs hat dies den zusätzlichen Vorteil, dass die eintreffende Strahlung die Wahrscheinlichkeit einer Auslösung zusätzlicher SPAD-Zellen und somit die Signalgüte erhöht. Beim Freilegen des Reflexionsbereichs 48 können Laserparameter eingestellt werden, mit denen die Reflexionseigenschaften zusätzlich verbessert werden, beispielsweise eine Vorzugsrichtung der Reflexion über ein Schraffurmuster erreicht werden.

Figur 7 zeigt nochmals eine Schnittansicht einer mehrschichtigen Blende 24 mit einer metallischen Schicht 32. In Figur 8 ist diese Blende 24 an der Oberfläche der metallischen Schicht 32 zumindest in einem Teilbereich 50 mit einem Laser bearbeitet. Dadurch kann beispielsweise erreicht werden, dass der Teilbereich 50 diffus beziehungsweise nicht mehr reflektierend wird.

Figur 9 zeigt eine schematische Schnittdarstellung durch einen optoelektronischen Sensor 10 in einer Ausführungsform als Laserscanner. Der Sensor 10 umfasst in dieser Ausführungsform in grober Aufteilung eine bewegliche Abtasteinheit 52 und eine Sockeleinheit 54. Die Abtasteinheit 52 ist der optische Messkopf, während in der Sockeleinheit 54 weitere Elemente wie eine Versorgung, Auswertungselektronik, Anschlüsse und dergleichen untergebracht sind. Im Betrieb wird mit Hilfe eines Antriebs 56 der Sockeleinheit 54 die Abtasteinheit 52 in eine Drehbewegung um eine Drehachse 58 versetzt, um so einen Überwachungsbereich 18 periodisch abzutasten.

In der Abtasteinheit 52 ist gleichsam ein mitdrehender optoelektronischer Taster ähnlich demjenigen der Figur 1 untergebracht. Allerdings ist dieser Taster nun beispielhaft mehrstrahlig ausgeführt. Dadurch wird der Laserscanner zu einem Mehrlagenscanner. Alternativ wäre ein Laserscanner mit nur einem Strahl oder umgekehrt ein stationärer mehrstrahliger Taster denkbar. Der Lichtsender 12 erzeugt also mit mehreren Lichtquellen 12a, hier rein beispielhaft vier Lichtquellen 12a, als Sendelicht 14 mehrere Lichtstrahlen. Dementsprechend kehren als Empfangslicht 20 mehrere remittierte Lichtstrahlen zu dem Sensor 10 zurück. Die SPADs 26a des Lichtempfängers 26 erzeugen einzeln oder gruppenweise jeweils ein Empfangssignal für jeden remittierten Lichtstrahl. Dementsprechend ist eine Blende 24 mit mehreren Blendenöffnungen 40 oder sind mehrere Blenden 24 für die verschiedenen Lichtstrahlen vorgesehen.

Lichtsender 12 und Lichtempfänger 26 sind in der in Figur 9 gezeigten Ausführungsform gemeinsam auf einer Leiterkarte 60 angeordnet, die auf der Drehachse 58 liegt und mit der Welle 62 des Antriebs 56 verbunden ist. Dies ist nur beispielhaft zu verstehen, es sind praktisch beliebige Anzahlen und Anordnungen von Leiterkarten denkbar. Eine berührungslose Versorgungs- und Datenschnittstelle 64 verbindet die bewegliche Abtasteinheit 52 mit der ruhenden Sockeleinheit 54. Dort befindet sich die Steuer- und Auswertungseinheit 28, die zumindest teilweise auch auf der Leiterkarte 60 oder an anderem Ort in der Abtasteinheit 52 untergebracht sein kann. Zusätzlich zu den bereits zu Figur 1 erläuterten Funktionen wird davon auch der Antrieb 56 gesteuert und ein Signal einer nicht gezeigten, von Laserscannern allgemein bekannten Winkelmesseinheit ausgewertet, welche die jeweilige Winkelstellung der Abtasteinheit 52 bestimmt. Aus den mittels Lichtlaufzeitverfahren gemessenen Distanzen zu einem angetasteten Objekt und der zugehörigen Winkelstellung stehen nach jeder Scanperiode zweidimensionale Polarkoordinaten aller Objektpunkte in einer Abtastebene zur Verfügung. Die jeweilige Abtastebene ist über die Identität des jeweiligen Lichtstrahls bekannt, so dass insgesamt ein dreidimensionaler Raumbereich durch mehrere Ebenen abgetastet wird. Genaugenommen wird nur für einen zentralen Lichtstrahl mit Elevationswinkel 0° eine Ebene abgetastet, ansonsten sind es Kegelmantelflächen, die aber vereinfacht auch als Abtastebenen aufgefasst werden können.

Der dargestellte Sensor 10 ist ein Laserscanner mit rotierendem Messkopf, nämlich der Abtasteinheit 52. Dabei kann nicht nur ein einzelnes Sende-Empfangsmodul mitrotieren wie hier dargestellt, es sind weitere derartige Module mit Höhenversatz oder einem Winkelversatz bezüglich der Drehachse 58 vorstellbar. Alternativ ist auch eine periodische Ablenkung mittels Drehspiegel oder einem Facettenspiegelrad denkbar. Bei mehreren Lichtstrahlen ist dabei zu beachten, dass es von der jeweiligen Drehstellung abhängt, wie die mehreren Lichtstrahlen in den Überwachungsbereich 18 fallen, denn deren Anordnung rotiert durch den Drehspiegel, wie bekannte geometrische Überlegungen ergeben. Eine weitere alternative Ausführungsform schwenkt die Abtasteinheit 52 hin und her, entweder anstelle der Drehbewegung oder zusätzlich um eine zweite Achse senkrecht zur Drehbewegung, um auch in Elevation eine Abtastbewegung zu erzeugen.

## Patentansprüche

1. Optoelektronischer Sensor (10) zur Erfassung eines Objekts in einem Überwachungsbereich (18), der einen Lichtsender (12) zum Aussenden von Sendelicht (14), einen Lichtempfänger (26) zum Empfangen von in dem Überwachungsbereich (18) remittiertem Sendelicht (20), eine dem Lichtempfänger (26) vorgeordnete Empfangsoptik (22) mit einer Blende (24) sowie eine Steuer- und Auswertungseinheit (28) aufweist, die dafür ausgebildet ist, anhand eines Empfangssignals des Lichtempfängers (26) aus einer Lichtlaufzeit zwischen Aussenden des Sendelichts (14) und Empfangen des remittierten Empfangslichts (20) einen Abstand zu dem Objekt zu bestimmen, wobei die Blende (24) ein Blendensubstrat (34) mit mindestens einer metallischen Schicht (32) und eine Blendenöffnung (40) umfasst und ein Kontaktbereich (42) der metallischen Schicht (32) zum Potentialausgleich elektrisch leitend mit einem anderen Bauteil (44) des Sensors (10) verbunden ist,
**dadurch gekennzeichnet,**
**dass** der Lichtempfänger (26) eine Vielzahl von im Geigermodus betreibbaren Lichtempfangselementen (26a) aufweist und dass die metallische Schicht (32) dem Lichtempfänger (26) zugewandt ist und wenigstens teilweise freiliegt (48), um von dem Lichtempfänger (26) rückgestreutes remittiertes Sendelicht (20) erneut auf den Lichtempfänger (26) zu reflektieren.

2. Sensor (10) nach Anspruch 1,
der eine leitende Abschirmung zumindest des Lichtempfängers (26) aufweist, wobei insbesondere der Kontaktbereich (42) mit der Abschirmung elektrisch leitend verbunden ist.

3. Sensor (10) nach Anspruch 1 oder 2,
wobei der Kontaktbereich (42) mit einer Elektronikkarte des Sensors (10) elektrisch leitend verbunden ist, insbesondere einer Elektronikkarte der Steuer- und Auswertungseinheit (28).

4. Sensor (10) nach einem der vorhergehenden Ansprüche,
wobei über den Kontaktbereich (42) eine Spannung (46) an die metallische Schicht (32) anlegbar ist, um die metallische Schicht (32) zu erwärmen.

5. Sensor (10) nach einem der vorhergehenden Ansprüche,
wobei der freiliegende Teil (48) der metallischen Schicht (32) strukturiert ist, um Reflexionseigenschaften einzustellen.

6. Sensor (10) nach einem der vorhergehenden Ansprüche,
wobei die Blende (24) mehrschichtig mit mindestens einer der folgenden zusätzlichen Schichten auf einer dem Lichtempfänger (26) zugewandten und/oder einer dem Lichtempfänger (26) abgewandten Seite ausgebildet ist: eine Absorptionsschicht (36, 38), eine Antireflexionsschicht, eine Filterschicht.

7. Sensor (10) nach einem der vorhergehenden Ansprüche,
wobei die Blendenöffnung (40) mit einem Laser, insbesondere einem Laserablationsprozess hergestellt ist, insbesondere individuell unter Verwendung der Empfangsoptik (22).

8. Sensor (10) nach einem der vorhergehenden Ansprüche, der als Laserscanner ausgebildet ist und eine bewegliche Ablenkeinheit (52) aufweist, mit deren Hilfe das Sendelicht (14) periodisch durch den Überwachungsbereich (18) geführt wird, wobei insbesondere die Ablenkeinheit (52) in Form einer drehbaren Abtasteinheit ausgebildet ist, in welcher der Lichtsender (12) und/oder der Lichtempfänger (26) untergebracht ist.

9. Sensor (10) nach einem der vorhergehenden Ansprüche,
wobei der Lichtsender (12) zum Aussenden mehrerer voneinander separierter Lichtstrahlen (14) und der Lichtempfänger (26) zum Erzeugen jeweiliger Empfangssignale aus mehreren remittierten Lichtstrahlen (20) ausgebildet ist, und wobei insbesondere die Blende (24) eine Blendenöffnung (40) je Lichtstrahl (14, 20) aufweist.

## Claims

1. An optoelectronic sensor (10) for detecting an object in a monitored zone (18) that comprises a light transmitter (12) for transmitting transmitted light (14), a light receiver (26 for receiving transmitted light (20) remitted in the monitored zone (18), a reception optics (22) arranged upstream of the light receiver (26) and having a diaphragm (24), and a control and evaluation unit (28) that is configured to determine a distance from the object with reference to a received signal of the light receiver (26) from a time of flight between the transmission of the transmitted light (14) and the reception of the remitted received light (20), wherein the diaphragm (24) comprises a diaphragm substrate (34) having at least one metallic layer (32) and one diaphragm aperture (40), and a contact region (42) of the metallic layer (32) is electrically conductively connected to another component (44) of the sensor (10) for potential equalization,
**characterized in that**
the light receiver (26) has a plurality of light reception elements (26a) operable in Geiger mode; and **in that** the metallic layer (32) faces the light receiver (26 and is at least partly exposed (48) to reflect backscattered transmitted light (20) remitted by the light receiver (26) onto the light receiver (26) again.

2. A sensor (10) in accordance with claim 1,
that has a conductive shield of at least the light receiver (26), with in particular the contact region (42) being electrically conductively connected to the shield.

3. A sensor (10) in accordance with claim 1 or claim 2,
wherein the contact region (42) is electrically conductively connected to an expansion card of the sensor (10), in particular to an expansion card of the control and evaluation unit (28).

4. A sensor (10) in accordance with any one of the preceding claims,
wherein a voltage (46) can be applied to the metallic layer (32) via the contact region (42) to heat the metallic layer (32).

5. A sensor (10) in accordance with any one of the preceding claims,
wherein the exposed part (48) of the metallic layer (32) is structured to set reflection properties.

6. A sensor (10) in accordance with any one of the preceding claims,
wherein the diaphragm (24) is configured as multilayer having at least one of the following additional layers on a side facing the light receiver (26) and/or remote from the light receiver (26): an absorption layer (36, 38), an anti-reflection layer, a filter layer.

7. A sensor (10) in accordance with any one of the preceding claims,
wherein the diaphragm aperture (40) is manufactured by a laser, in particular by a laser ablation process, in particular individually using the reception optics (22).

8. A sensor (10) in accordance with any one of the preceding claims, that is configured as a laser scanner and has a movable deflection unit (52) with whose aid the transmitted light (14) is periodically guided through the monitored zone (18), wherein the deflection unit (52) is in particular configured in the form of a rotatable scanning unit in which the light transmitter (12) and/or the light receiver (26) is/are accommodated.

9. A sensor (10) in accordance with any one of the preceding claims,
wherein the light transmitter (12) is configured to transmit a plurality of mutually separate light beams (14) and the light receiver (26) is configured to generate respective received signals from a plurality of remitted light beams (20), and wherein the diaphragm (24) in particular has one diaphragm aperture (40) per light beam (14, 20).

## Revendications

1. Capteur optoélectronique (10) pour détecter un objet dans une zone à surveiller (18), comprenant un émetteur de lumière (12) destiné à émettre de la lumière d'émission (14), un récepteur de lumière (26) destiné à recevoir de la lumière d'émission (20) renvoyée dans la zone à surveiller (18), une optique de réception (22) disposée en amont du récepteur de lumière (26) et présentant un diaphragme (24), ainsi qu'une unité de commande et d'évaluation (28) conçue pour déterminer une distance par rapport à l'objet à l'aide d'un signal de réception du récepteur de lumière (26) à partir d'un temps de vol de la lumière entre l'émission de la lumière d'émission (14) et la réception de la lumière de réception renvoyée (20), le diaphragme (24) comprenant un substrat de diaphragme (34), muni d'au moins une couche métallique (32), et une ouverture de diaphragme (40), et une zone de contact (42) de la couche métallique (32) étant reliée de manière électriquement conductrice à un autre composant (44) du capteur (10) pour la compensation de potentiel,
**caractérisé en ce que**
le récepteur de lumière (26) comprend une pluralité d'éléments récepteurs de lumière (26a) pouvant fonctionner en mode Geiger, et
**en ce que** la couche métallique (32) est tournée vers le récepteur de lumière (26) et est au moins partiellement à découvert (48) pour réfléchir à nouveau sur le récepteur de lumière (26) la lumière d'émission renvoyée (20) rétrodiffusée par le récepteur de lumière (26).

2. Capteur (10) selon la revendication 1,
comprenant un blindage conducteur d'au moins le récepteur de lumière (26), en particulier, la zone de contact (42) étant reliée de manière électriquement conductrice au blindage.

3. Capteur (10) selon la revendication 1 ou 2,
dans lequel la zone de contact (42) est reliée de manière électriquement conductrice à une carte électronique du capteur (10), en particulier à une carte électronique de l'unité de commande et d'évaluation (28).

4. Capteur (10) selon l'une des revendications précédentes,
dans lequel une tension (46) peut être appliquée à la couche métallique (32) par l'intermédiaire de la zone de contact (42) afin de chauffer la couche métallique (32).

5. Capteur (10) selon l'une des revendications précédentes,
dans lequel la partie à découvert (48) de la couche métallique (32) est structurée pour ajuster les propriétés de réflexion.

6. Capteur (10) selon l'une des revendications précédentes,
dans lequel le diaphragme (24) est réalisé en plusieurs couches avec au moins l'une des couches supplémentaires suivantes sur une face tournée vers le récepteur de lumière (26) et/ou détournée du récepteur de lumière (26) : une couche d'absorption (36, 38), une couche anti-réfléchissante, une couche filtrante.

7. Capteur (10) selon l'une des revendications précédentes,
dans lequel l'ouverture de diaphragme (40) est réalisée par un laser, en particulier par un processus d'ablation au laser, en particulier individuellement par utilisation de l'optique de réception (22).

8. Capteur (10) selon l'une des revendications précédentes,
qui est conçu comme un scanner laser et comprend une unité de déviation mobile (52) à l'aide de laquelle la lumière d'émission (14) est guidée périodiquement à travers la zone à surveiller (18), en particulier, l'unité de déviation (52) étant conçue sous la forme d'une unité de balayage rotative dans laquelle sont logés l'émetteur de lumière (12) et/ou le récepteur de lumière (26).

9. Capteur (10) selon l'une des revendications précédentes,
dans lequel l'émetteur de lumière (12) est conçu pour émettre plusieurs rayons lumineux (14) séparés les uns des autres, et le récepteur de lumière (26) est conçu pour générer des signaux de réception respectifs à partir de plusieurs rayons lumineux renvoyés (20), et, en particulier, le diaphragme (24) présente une ouverture de diaphragme (40) par rayon lumineux (14, 20).
